(19) Europäisches Patentamt
European Patent Office
Office européen des brevets

(11) EP 2 068 260 A1

(12) EUROPEAN PATENT APPLICATION

(43) Date of publication:
10.06.2009 Bulletin 2009/24

(51) Int Cl.:
*G06F 17/50* (2006.01)  *B60R 16/00* (2006.01)

(21) Application number: 08163310.9

(22) Date of filing: 29.08.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 28.11.2007 JP 2007308084

(71) Applicant: FUJITSU LIMITED
Kawasaki-shi, Kanagawa 211-8588 (JP)

(72) Inventors:
• Sazawa, Shinichi
Kawasaki-shi, Kanagawa 211-8588 (JP)
• Hashima, Masayoshi
Kawasaki-shi, Kanagawa 211-8588 (JP)

(74) Representative: Kreutzer, Ulrich et al
Cabinet Beau de Loménie
Bavariaring 26
80336 München (DE)

(54) **Harness design apparatus**

(57) First, the position and the length of a harness are set. Next, a shape setting function having an unknown variable that minimizes potential energy as a binding position is generated, and a position of the minimum potential energy at a bending position is calculated in the Lagrange Multiplier Method. The position of the minimum potential energy obtained by the Lagrange Multiplier Method is the optimum binding position.

FLOW OF PROCESS

P0 =(p0x, p0y, p0z)

P1

P2

P3

P4

MOVING TO
BINDING POSITION

F I G. 3

EP 2 068 260 A1

**Description**

**Background of the Invention**

**Field of the Invention**

The present invention relates to a harness design apparatus for automatically designing the arrangement of a harness etc.

**Description of the Related Art**

In developing a mechanical product and a device, determining a wiring path of a linear flexible object such as a wire, a harness, a cable, etc. is referred to as harness designing. In the harness designing, the path, the fixed position, and the length of a harness is determined with the curvature, the length, the easier assembly, the interference and nipping when the mechanism moves, etc. taken into account. With respect to the harness designing, there is a harness design support system for virtually designing the shape of the harness on the digital mock-up on a computer, and designing the path and the length of a harness.

A conventional technique of a harness design support system is recited in the non-patent document 1 that discloses a method of calculating the shape of a harness to minimize the mechanical energy of the entire harness. However, it is a method of calculating the shape of a harness with the length of the harness and the positions of its both ends defined as restriction conditions, but does not describe a case where a harness is bound.

Conventionally, a user empirically and manually designs the binding position of each harness and the position of a device on which a binding portion is fixed, but there has been no technology of automatically performing the designing.

That is, in the conventional technology, each designer models a harness while considering the binding position and the fixing position, verifies the length and the curvature of the harness, and re-models a harness if there is a problem as a result of the verification, thereby designing the optimum arrangement by trial and error. Therefore, there has been the problem of dependency on the skill of a designer.

[Non-patent Document 1] Study report of Information Processing Society of Japan "Graphics and CAD" No. 113 IPSJ SIG Technical Report 2003-CG-113 "3-dimensional Design Support System" by Masayoshi Hashima, Yosuke Senda, and Yuichi Sato of Fujitsu Institute

It is necessary to determine in advance one or more binding positions of a harness (hereinafter referred to as "binding") Thus, demanded is a method of correctly and efficiently determining the optimum binding position of a harness subject to the lightest load without depending on the skill of a designer.

**Summary of the Invention**

The present invention aims at providing a harness design apparatus capable of automatically designing the optimum position at which a harness is bound.

The harness design apparatus according to an aspect of the present invention automatically designs a method of loading a harness. The apparatus includes: a condition setting device for acquiring a binding position on the harness or a restriction condition to be satisfied by the harness; and a binding position acquisition device for varying the binding position under the condition of the binding position indicated by the acquisition device, and acquiring as the binding position a position for minimal mechanical energy of the entire harness.

The optimum binding position for the lightest load on the harness can be automatically designed by obtaining a method of loading a harness for minimal mechanical energy on the entire harness under the restriction condition relating to the harness itself or the binding position.

The present invention can provide the harness design apparatus for automatically optimizing the binding position of a harness.

The present invention also aims at providing a harness designing method comprising:

- acquiring a binding position of the harness or a restriction to be satisfied by the harness;
- varying the binding position under a condition of the binding position;
- acquiring as a binding position a position for minimal mechanic energy of the entire harness.

In a particular embodiment of the invention, the restriction condition is provided as a ratio of a length from an end point of the harness to a binding to a total length of the harness.

In a particular embodiment of the invention, the restriction condition is to restrict a position of a binding of a harness within a predetermined range.

In a particular embodiment of the invention, the restriction condition is to allow a movement of a position of a binding of a harness only in a predetermined direction.

In a particular embodiment of the invention, the restriction condition is to vary a length of a harness in a predetermined range in a state in which a position of a binding is specified.

In a particular embodiment of the invention, the restriction condition is to move an end point of a harness in a direction in which the harness is bent.

**Brief Description of the Drawings**

FIG. 1 is a flowchart of the outline of the process according to an embodiment of the present invention;

FIG. 2 is an explanatory view (1) of obtaining the binding position for minimizing the potential energy;

FIG. 3 is an explanatory view (2) of obtaining the binding position for minimizing the potential energy;

FIG. 4 is a flowchart of the process of obtaining the shape of a harness;

FIG. 5 is a flowchart of the process of obtaining the binding position when the binding position can be moved only in an allowed range;

FIG. 6 is a flowchart of the process of obtaining the binding position when there is the binding condition of moving the position of a binding point only in the direction along a groove;

FIG. 7 is a flowchart of the process of obtaining the optimum length of a harness by changing the length of each wire in a constant range with the binding position specified in advance;

FIG. 8 is a flowchart of the process of determining the binding position of a wire harness whose end points can be driven;

FIG. 9 is a flowchart of the process of issuing a warning to a user by displaying the shape of the harness subject to the heaviest load after the process of FIG. 8; and

FIG. 10 shows an example of the hardware configuration of a computer when the 3-dimensional harness design apparatus at the embodiments of the present invention is realized using a program.

**Description of the Preferred Embodiments**

In the embodiment of the present invention, the binding point having the smallest potential energy is calculated by a kinetic equation using a length of a harness, an end point position of a harness, etc. as a binding parameter.

1) Harness design method

The harness to be designed according to the present embodiment (a linear flexible object such as a wire, a harness, a cable, etc. is hereinafter referred to simply as a harness) is generated in the following method.

Assuming that a harness is a curve of line and its potential energy is a sum of the elasticity energy of bending and twisting, and the position energy by gravity, the potential energy U is expressed as follows.

[Math 1]

$$U = \frac{1}{2}\int_0^L R_f \kappa^2 ds + \frac{1}{2}\int_0^L R_t \omega^2 ds + \int_0^L Dz ds$$

where s indicates the distance from the end point along the harness curve, $\kappa$, $\omega$, z indicate the curvature, twist ratio, and height respectively at the point from the distance s. $R_f$, $R_t$, and D are respectively a flexural rigidity coefficient, a twist rigidity coefficient, and a linear weight per unit length, and depend on the material properties of the harness. L indicates a length of a curve. The harness curve that minimizes the energy can be obtained by solving the optimization problem with constraints using the positions of the start point and end point and the direction of a harness and the length of the harness as geometric restriction conditions.

2) When a binding is generated, the above-mentioned potential energy is given by a sum of two sections one of which is a section between the start point of a harness and a binding position, and the other of which is a section between the binding position and the end point.

3) Furthermore, when the constraints of the direction of the binding are considered, the direction is added to the restriction condition of the potential energy.

4) The base function of the harness curve can be a Bezier curve representing a free curve. Therefore, the data output by solving the minimization problem of the above-mentioned U is the minimum value of the U and a parameter of the Bezier curve. Using an approximated curve, a parameter space of the optimizing calculation can be narrowed, and the computational complexity can be reduced.

A generated shape can be displayed on an appropriate 3-dimensional mock-up simulator, and the shape of a harness can be transformed in real time while moving parts by a mouse etc.

5) In the present embodiment, the binding position is based on the potential energy (mechanical energy) U, the length L1 of the harness from the start point to the binding, and the length L2 of the harness from the binding to the end point of the harness as the function of the binding position V as follows. (Since the flexural rigidity coefficient, the twist rigidity coefficient, and the linear weight per unit length are constants, they are omitted here.)

$$U = U (V)$$

$$L1 = L (V)$$

$$L2 = L (V)$$

For example, L1 + L2 are fixed, and the potential energy is to be minimized when the binding position V is moved. To attain this, the well known Lagrange Multiplier Method is used. That is, using an undefined multiplier $\lambda$, the extremum problem of Y is to be solved by the following equation.

$$Y = U (V) - \lambda (L1 (V) + L2 (V))$$

6) When the above-mentioned extremum problem is calculated, V is obtained by the partial differentiation of Y made 0. It is obtained in the Newton-Raphson method in which an iterative approximation is performed by specifying an appropriate initial value. In the Newton-Raphson method, although the range of the V is restricted, the calculation is aborted when the V exceeds the specified range in the iterative calculation. Otherwise, the calculating method can be changed by amending the difference value from the calculation value.

7) When the curvature of the binding point is to be minimized, the curvature of the binding position is obtained from the output parameter of the Bezier curve described in 4) above.

$$C = C (V)$$

By the equation, the extremum problem can be solved as in the method described above.

8) To obtain the length with the binding position specified in advance, the binding position V is fixed, and the L is a target value. Therefore, the following relational expression holds.

$$U = U (L, V) \quad (V \text{ is fixed})$$

On the other hand, as in 5) and 6) above, the extremum problem can be solved and the optimum value of L can be obtained. This method can be similarly applied as described in 7) above when the target of the extremum is a curvature.

9) When the end point of the wire harness can be driven, the following equations hold.

$$U = U (V, P1, P2)$$

$$L1 = L (V, P1, P2)$$

$$L2 = L (V, P1, P2)$$

where P1 and P2 indicate the positions of the end points. By general equations of mechanism, P1 and P2 are represented by the following equations using θ as a joint value.

$$Pi = F (\theta) + r$$

(i = 1 or 2) when driving is performed by a rotation joint

$$Pi = L (\theta) + r$$

(i = 1 or 2) when driving is performed by a translation joint
where F indicates a polynomial by a trigonometric function, and L indicates a first-order equation of θ. Therefore, a partial derivative can be easily calculated in either equation. The result is substituted for the U to calculate the total differential.

This method can be similarly applied as described in 7) above when the target of the extremum is a curvature.

A joint normally varies only within a predetermined range. Then, the joint value in the range is calculated in advance on an appropriate scale, and the value of U is obtained, thereby successfully showing a warning to a user when the potential energy reaches the maximum value during operation by the 3-dimensional mock-up simulator.

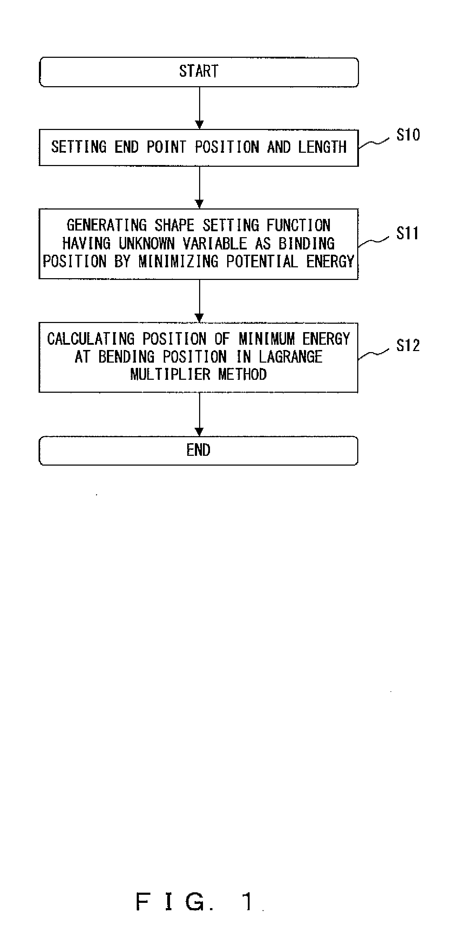

FIG. 1 is a flowchart showing the outline of the process according to an embodiment of the present invention.

First, in step S10, the position of the end point and the length of the wire etc. to be bound by the harness are set. In step S11, a shape setting function in which a binding position is unknown variable is generated to minimize the potential energy. Instep S12, using the shape setting function generated in step S11, the position of the minimum energy in the folded position is calculated in the Lagrange Multiplier Method.

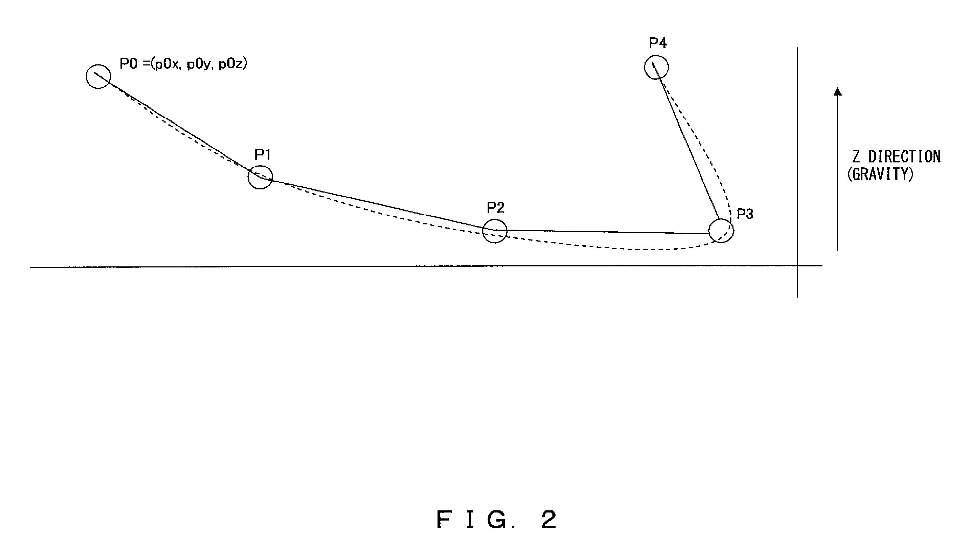

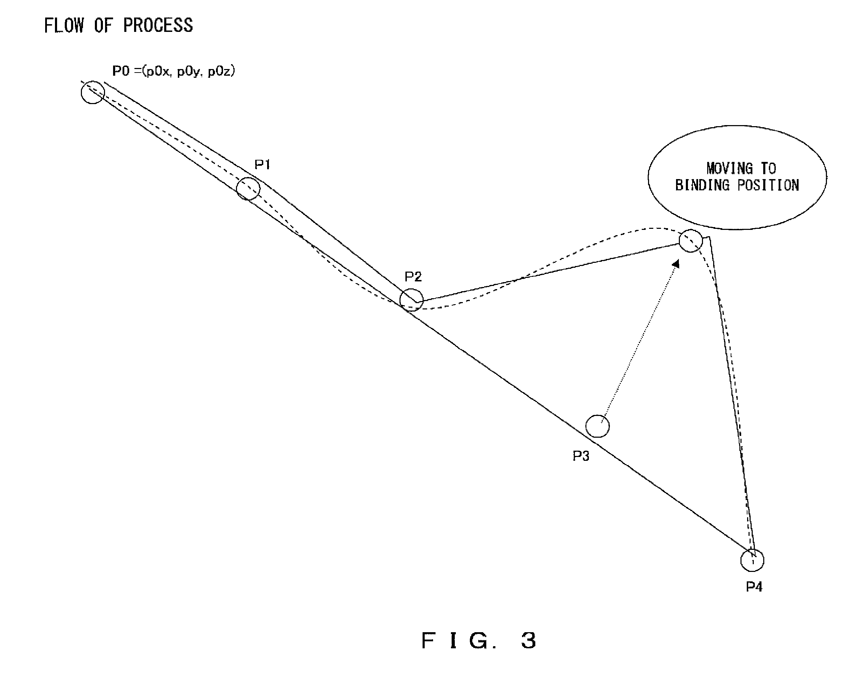

FIGS. 2 and 3 are explanatory views of obtaining the binding position to minimize the potential energy.

In FIGS. 2 and 3, the harness is divided into four divisions to obtain potential energy.

First, the following elements are determined in advance.

· natural length between particles = 1
· modulus of elasticity between particles = K
· modulus of flexural elasticity = R
· mass of segment between particles = M

$$\text{potential energy} = 0.5 * \sum K * (|Pi+1 - Pi| - 1)^2 +$$
$$0.5 * \sum R * (\text{square of the angle at } Pi) +$$
$$0.5 * \sum M * (Piz + P(i+1)z)$$

where Pi indicates the position of the i-th point on the harness.

To obtain the minimum value of the potential energy above, a differentiated kinetic equation is solved.

$$0 = \sum K * (Pi+1 - Pi - 1) +$$
$$\sum R * (\text{angle at } Pi) +$$
$$\sum M * (0, 0, 1)$$

It is a simple differential equation, and can be solved by a well known method (Runge-kutta).
cf. Numerical Recipes in C++: The Art of Scientific Computing Saul A. Teukoksky (author), William T. Vetterling (author), Brian P. Flannery (author), William H. Press
ISBN-10: 0521750334
pp713ff

Practically, as shown in FIG. 3, a point on a harness is moved to a binding position, the above-mentioned kinetic equation is solved, and the shape of the harness is obtained at the binding position. The process is performed at various binding positions to obtain various binding positions and a binding position at which the minimum potential energy is provided is found from sets of each binding position and its shape of wire.

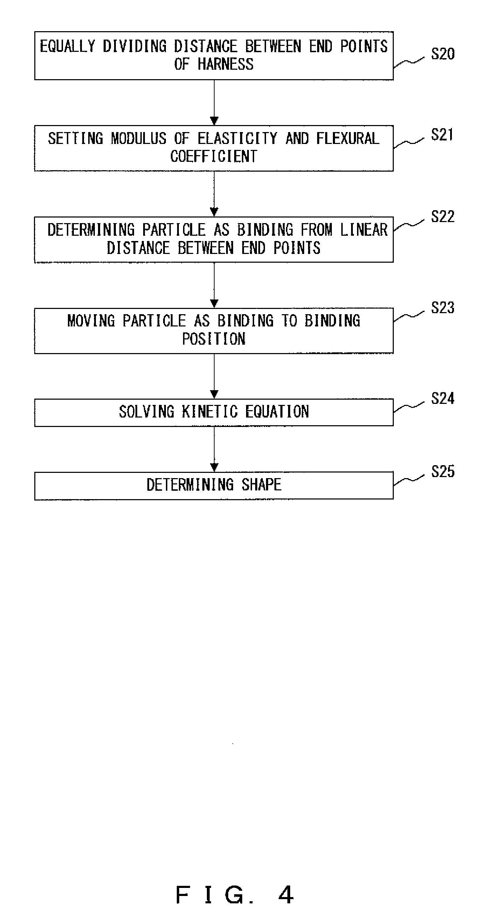

FIG. 4 is a flowchart of the process of obtaining the shape of a harness.

In step S20, the distance between the end points of a harness is divided into two equal parts. In step S21, a modulus of elasticity and a flexural coefficient are set. In step S22, a particle indicating a binding is determined from the linear distance between the end points of a harness. That is, the position forming the binding is determined on the basis of the ratio of the length from the start of a harness to the binding to the entire length of the harness. The particle on the harness forming the binding is moved to the binding position. In step S24, the above-mentioned kinetic equation is solved. In step S25, the shape of the harness is determined.

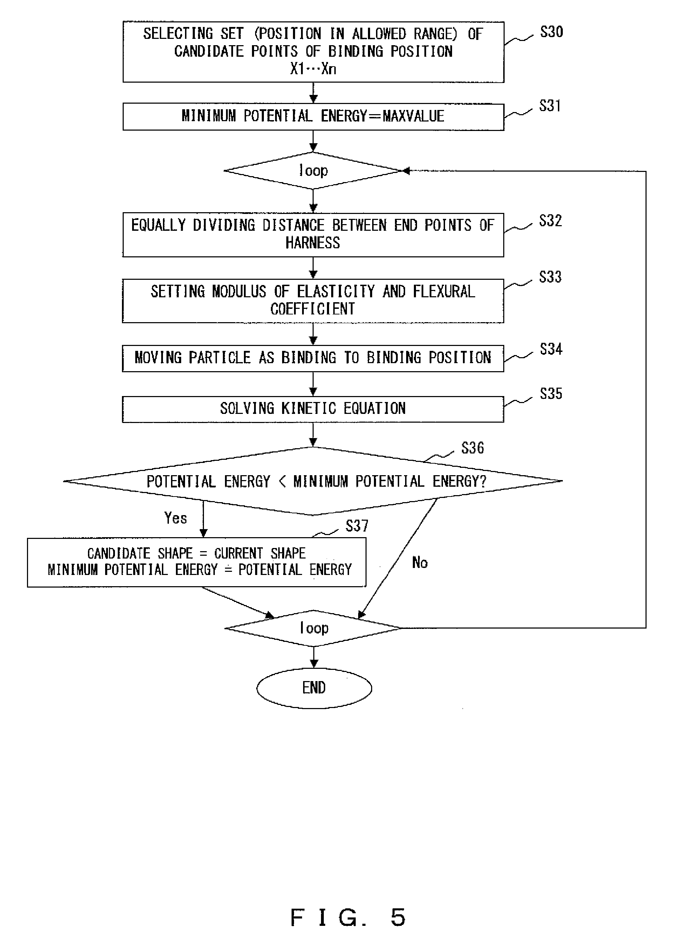

FIG. 5 is a flowchart of the process of obtaining the binding position when the binding position can move only within an allowed range.

First, in step S30, a set of candidate points of a binding position is selected in an allowed range. The selection is performed by a user. The binding position as an element of the set is set as X1, ..., Xn. Then, in step S31, the initial value MAXVALUE is set as a variable (minimum potential energy). In step S32, the distance between the end points of the harness is equally divided into two parts. In step S33, a modulus of elasticity and a flexural coefficient are set. In step S34, a particle indicating a binding is moved to a position (one of X1, ..., Xn) in the set of candidates for a binding position. In step S35, the kinetic equation is solved using the binding position. In step S36, it is determined whether or not the potential energy obtained by solving the kinetic equation is smaller than the variable (minimum potential energy). If the determination in step S36 is NO, control is returned to step S32. If the determination in step S36 is YES, then the current shape is set as the candidate shape for the harness in step S37, the current potential energy is set for the variable (minimum potential energy), and control is returned to step S32. The processes from step S32 to step S37 are performed on all points of the candidates for the binding position obtained in step S30, thereby terminating the process.

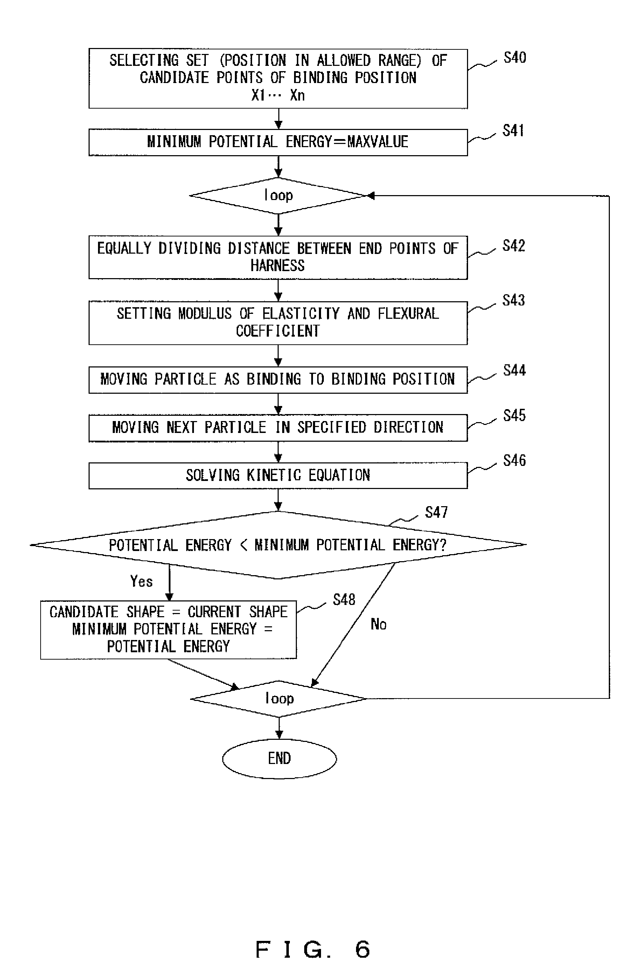

FIG. 6 is a flowchart of the process of obtaining the binding position when there is the binding condition of moving the position of a binding point only in the direction along a groove.

First, in step S40, a set of candidate points of a binding position is selected within a range satisfying the restriction conditions. The selection is performed by a user. In this case, for example, the restriction condition of a straight line along a groove etc. is to be satisfied. The binding position as an element of the set is X1, ..., Xn. Next, in step S41, the initial value MAXVALUE is set as a variable (minimum potential energy) . In step S42, the distance between the end points of the harness is equally divided into two parts. In step S43, the modulus of elasticity and the flexural coefficient are set. In step S44, a particle as a binding is moved to one position of the set (X1, ..., Xn) of candidates for a binding position. In step S45, the particles on the harness other than the binding position are arranged after moved in a specified direction satisfying the binding condition. In step S46, the kinetic equation is solved. In step S47, it is determined whether or not the potential energy obtained by solving the kinetic equation is smaller than a variable (minimum potential energy) . If the determination in step S47 is NO, control is returned to step S42. If the determination in step S47 is YES, then the current shape is set as a candidate shape for a harness in step S48, and the current potential energy is set as a variable (minimum potential energy), thereby returning control to step 42. The processes from step S42 to step S48 are performed on all candidate points for the binding position obtained in step S40, thereby terminating the process.

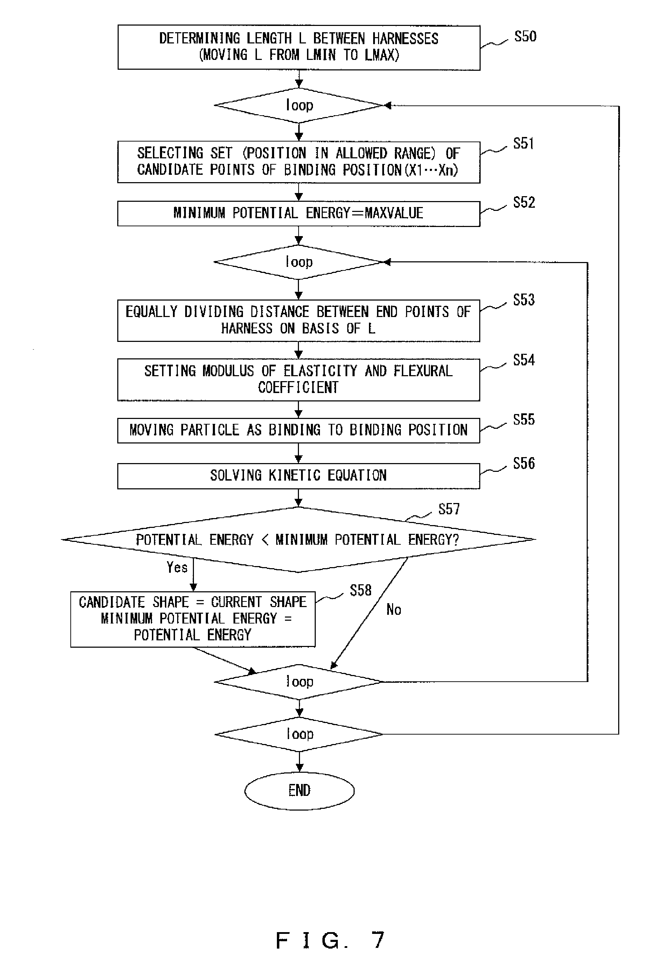

FIG. 7 is a flowchart of the process of obtaining the optimum length of a harness by changing the length of each wire in a constant range with the binding position specified in advance.

First, in step 550, the minimum value lmin and the maximum value lmax of the problem of the harness are set, and the length 1 of the harness is selected between the minimum value lmin and the maximum value lmax. Next, in step S51, a user selects the set (X1, ..., Xn) of the candidate points for a binding position. That is, a user determines in advance a binding position, and sets some binding positions to be calculated by a user as candidate points for a binding position. In step S52, the initial value of MAXVALUE is set as a variable (minimum potential energy). In step S53, the distance of the harness having the length of 1 is equally divided into two parts. In step S54, the modulus of elasticity and the flexural coefficient are set. In step S55, the particle as a binding is moved to the binding position. Instep S56, a kinetic equation is solved on the basis of the set value. In step S57, it is determined whether or not the potential energy obtained by solving the kinetic equation is smaller than a variable (minimum potential energy). If the determination in step S57 is NO, then control is returned to step S53, the kinetic equation is solved for different binding positions, and it is determined whether or not the potential energy obtained by solving the kinetic equation is smaller than a variable (minimum potential energy) . If the determination in step S57 is YES, then the candidate shape for a harness is set as the current shape of the harness in step S58, and the current potential energy is set as a variable (minimum potential energy) . The processes from step S53 to step S58 are repeated for the entire set of candidate points for a binding position. When the iterative process is completely performed on all candidate points for the binding position, control is returned to step S51, and the processes from step S51 to step S58 are repeated on the different lengths 1 of the harness. The length 1 of the harness is moved between the minimum value lmin and the maximum value lmax, and the optimum length and the shape of the harness and the minimum potential are obtained. The length 1 of the harness is between the minimum value lmin and the maximum value lmax, and a discrete value changing in a predetermined step is obtained.

Thus, by changing a predetermined step, the length 1 of the harness calculated can be increased and decreased. When all cases of the length 1 of the harness are calculated, the process is terminated.

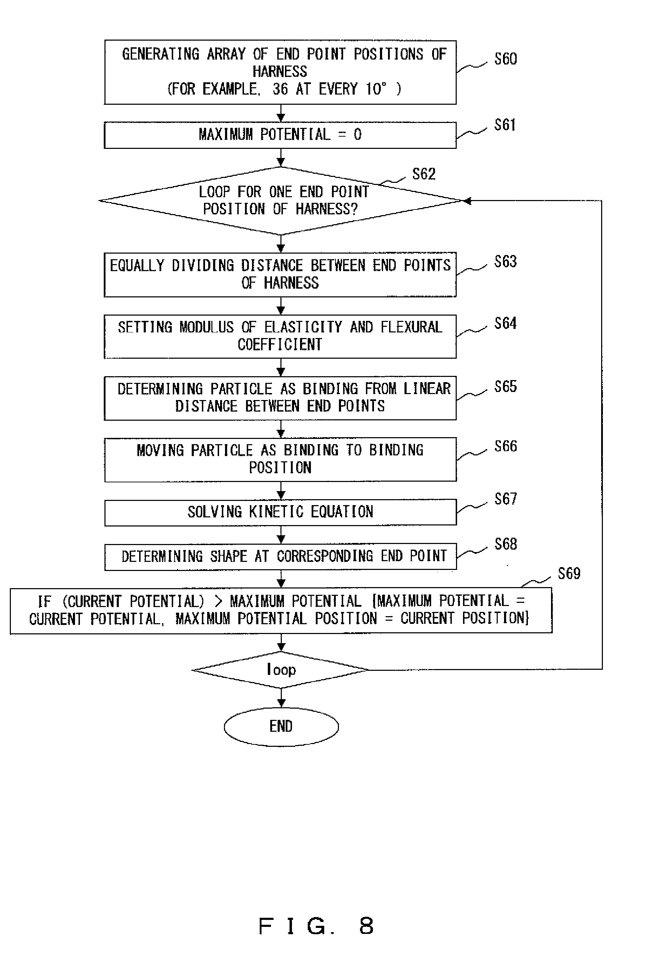

FIG. 8 is a flowchart of the process of determining the binding position of a wire harness whose end points can be driven.

Assumed here is, for example, the case in which one end of a wire harness is connected to a board provided with a keyboard in a notebook PC, and the other end is connected to the board of a monitor. In this case, by closing and opening the monitor, the position of the end point of the harness is rotated and changed. Thus, when the end point of the harness is rotated and moved, the optimum shape of the harness and position of the binding are obtained.

In step S60, the array of end points of the harness is generated. For example, 36 positions can be set every 10° from 0°. In step S61, the maximum potential is set to 0. The process in step S62 is a loop from step S63 to step S69 to be performed on all end point positions set in step S60. When one end point position is fixed, the distance between the end points of the harness is equally divided into two parts in step S63 . In step S64, the modulus of elasticity and the flexural coefficient are set. In step S65 , when the binding position is given by a ratio to the total length of the harness, the position of the particle as a binding is determined by the ratio of the linear distance between the end points. In step S66, the particle as a binding is moved to the binding position. In step S67, the kinetic equation is solved. In step S68, the shape of the harness at the end point position of the current process and the binding position are determined. In step S69, it is determined whether or not the potential energy obtained in step S67 is larger than the maximum potential energy. If the current potential energy is larger, the current potential energy is set to the maximum potential energy and the current position is set to the variable (maximum potential position). In step S69, when the current potential energy is equal to or lower than the maximum potential energy, no process is performed. After step S69, control is returned to step S62, and the processes from step S63 to S69 are performed on all end point positions. When the process is completed on all endpoint positions, the process is terminated.

In the processes shown in FIG. 8, the potential energy obtained by solving the kinetic equation in step S67 is compared for all end point positions set in step S60, and the end point position is obtained when the heaviest load is applied (the maximum potential energy is marked).

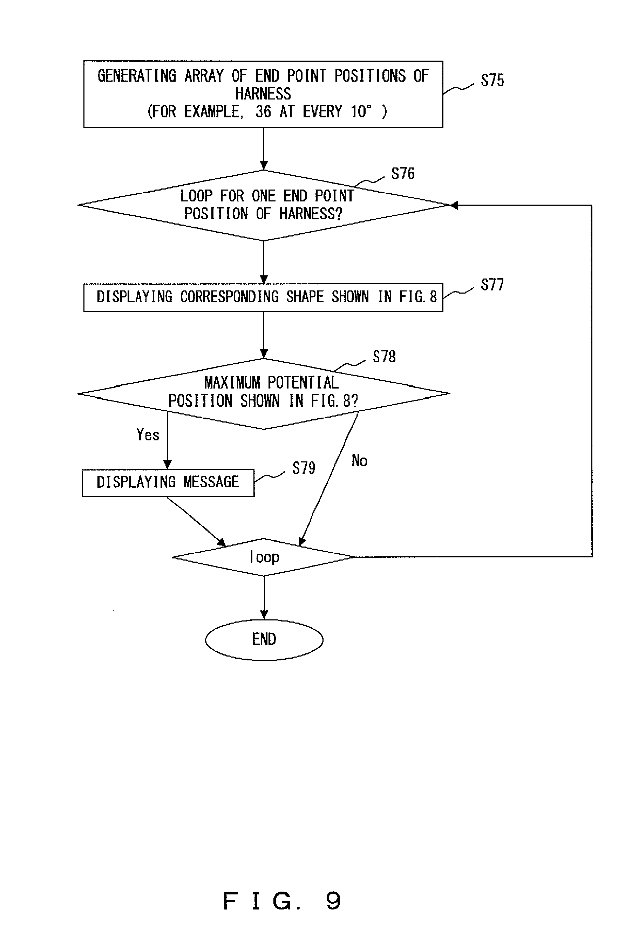

FIG. 9 is a flowchart of the process of issuing a warning to a user by displaying the shape of the harness subject to the heaviest load after the process shown in FIG. 8.

In step S75, the array of the end point positions of the harness (same as the array shown in FIG. 8 in which the array of 36 end point positions is generated at every 10° from 0°) is generated. In step S76, the process is a loop for repeating the processes from step S77 to step S79 on all endpoint positions generated in step S75. In step S77, the shape of the corresponding harness obtained in FIG. 8 is displayed on the screen of the computer for specific endpoint positions selected from the array of the end point positions generated in step S75. In step S78, it is determined whether or not the shape of the harness displayed in step S77 is the shape at the maximum potential position obtained in FIG. 8. If the determination in step S78 is NO, control is returned to step S77. If the determination in step S78 is YES, a message that the displayed shape of the harness refers to the maximum potential position is displayed on the screen of the computer in step S79, and control is returned to step S77. The loop from step S76 to step S79 continues until the process is completely performed on all end point positions included in the array of the end point positions in step S75. When the process is completed, it is terminated.

In the above-mentioned embodiments, the binding positions of a harness can be automatically and correctly determined although they have been conventionally determined manually by a designer when the harness is designed. It is also possible that the binding is determined only in a predetermined range due to the relationship with other parts when mechanical design is performed. Also in this case, as shown in FIG. 5, the binding position of a harness can be automatically and correctly determined. Depending on the type of harness, the position from the start of the binding position is fixed. Similarly, as shown in FIG. 5, the binding positions of a harness can be automatically and correctly determined. In addition, the fixtures used at the binding positions can limit the direction of the binding. In this case, similarly as shown in FIG. 6, the binding positions of a harness can be automatically and correctly determined.

In addition, it is necessary to check in advance how long a harness can reduce the load. In FIG. 7, a designer can automatically and correctly determine the length of a harness, which has been determined manually by a designer during designing the harness.

Furthermore, when the end point of a harness is fixed to a joint, the optimum binding positions of the harness naturally vary depending on the joint value of the joint. As shown in FIG. 9, on the basis of the state in which the heaviest load is assumed in the drive range of the joint, the optimum binding position can be automatically and correctly determined. In this case, it is important from the viewpoint of securing the robustness in design to confirm the state in which the heaviest load is assumed. With reference to FIG. 9, it can be easily realized.

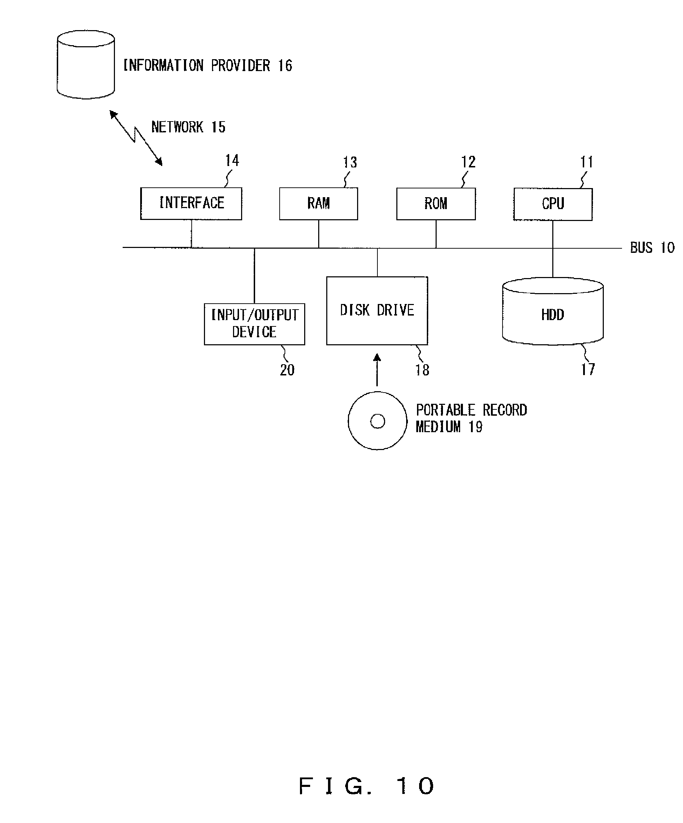

FIG. 10 shows an example of the hardware configuration of a computer when the 3-dimensional harness design apparatus according to the embodiments of the present invention is realized using a program.

The program is stored in a hard disk 17, read to RAM 13, and executed by a CPU 11. These components are interconnected via a bus 10. ROM 12 stores a basic program such as a BIOS etc. the input from a user or the output to the user is performed by an input/output device 20. The input/output device 20 includes an input device such as a keyboard, a mouse, etc., and an output device such as a display screen, a printer, etc.

When the program is stored in a portable record medium 19 such as a CD-ROM, CD-R, DVD, a diskette, etc., it is read from a disk drive 18, and developed into the RAM 13 etc.

An interface 14 accesses a database etc. of an information provider 16 over a network 15. The program can be accessed in the database of the information provider 16 and executed in a network environment.

**Claims**

1.  A harness design apparatus which automatically designs a method of loading a harness, comprising:

    condition setting means for acquiring a binding position on the harness or a restriction condition to be satisfied by the harness; and
    binding position acquisition means for varying the binding position under a condition of the binding position indicated by an acquisition device, and acquiring as the binding position a position for minimal mechanical energy of the entire harness.

2.  The apparatus according to claim 1, wherein
    the restriction condition is provided as a ratio of a length from an end point of the harness to a binding to a total length of the harness.

3.  The apparatus according to claim 1, wherein
    the restriction condition is to restrict a position of a binding of a harness within a predetermined range.

4.  The apparatus according to claim 1, wherein
    the restriction condition is to allow a movement of a position of a binding of a harness only in a predetermined direction.

5.  The apparatus according to claim 1, wherein
    the restriction condition is to vary a length of a harness in a predetermined range in a state in which a position of a binding is specified.

6.  The apparatus according to claim 1, wherein
    the restriction condition is to move an end point of a harness in a direction in which the harness is bent.

7.  The apparatus according to claim any one of claims 1 to 6, further comprising
    display means for displaying to a user how the harness having a position of the endpoint at which the harness is subject to a heaviest load when the end point of the harness is moved, is mounted.

8.  The apparatus according to any one of claims 1 to 7, wherein
    the mechanical energy is given by a following equation with a modulus of elasticity between particles = K, a flexural rigidity coefficient = R, a mass of a segment between particles = M, and a Pi as a position of a particle on the harness,

$$\text{mechanical energy} = 0.5 * \sum K * (|P_{i+1} - P_i| - 1)^2 +$$
$$0.5 * \sum R * (\text{square of the angle at } P_i) +$$
$$0.5 * \sum M * (P_{iz} + P_{(i+1)z}).$$

9.  The apparatus according to claim 8, wherein
    a shape of the harness that minimizes the mechanical energy is obtained by solving a following differentiation equation for Pi,

$$0 = \sum K * (Pi+1 - Pi - 1) +$$
$$\sum R * (angle\ at\ Pi) +$$
$$\sum M * (0, 0, 1).$$

10. A computer-readable recording medium recording a program for allowing a computer to realize a harness designing method for automatically designing how to load a harness, the recording medium used to direct the computer to function as:

condition setting means for acquiring a binding position on the harness or a restriction condition to be satisfied by the harness; and

binding position acquisition means for varying the binding position under a condition of the binding position indicated by an acquisition device, and acquiring as the binding position a position for minimal mechanical energy of the entire harness.

11. A harness designing method comprising:

- acquiring a binding position of the harness or a restriction to be satisfied by the harness;
- varying the binding position under a condition of the binding position;
- acquiring as a binding position a position for minimal mechanic energy of the entire harness.

12. A method according to claim 11 wherein the restriction condition is:

- provided as a ratio of a length from an end point of the harness to a binding to a total length of the harness; or
- to restrict a position of a binding of a harness within a predetermined range; or
- to allow a movement of a position of a binding of a harness only in a predetermined direction;
- to vary a length of a harness in a predetermined range in a state in which a position of a binding is specified; or
- to move an end point of a harness in a direction in which the harness is bent.

13. The method according to claim 11 or 12, further comprising displaying to a user how the harness having a position of the end point at which the harness is subject to a heaviest load when the end point of the harness is moved, is mounted.

14. The method according to any one of claims 11 to 13, wherein the mechanical energy is given by a following equation with a modulus of elasticity between particles = K, a flexural rigidity coefficient = R, a mass of a segment between particles = M, and a Pi as a position of a particle on the harness,

$$mechanical\ energy = 0.5 * \sum K * (|Pi+1 - Pi| - 1)^2 +$$
$$0.5 * \sum R * (square\ of\ the\ angle\ at\ Pi) +$$
$$0.5 * \sum M * (Piz + P(i+1)z).$$

15. The method according to claim 14, wherein a shape of the harness that minimizes the mechanical energy is obtained by solving a following differentiation equation for Pi,

$$0 = \sum K * (Pi+1 - Pi - 1) +$$
$$\sum R * (angle\ at\ Pi) +$$
$$\sum M * (0, 0, 1).$$

START

SETTING END POINT POSITION AND LENGTH — S10

GENERATING SHAPE SETTING FUNCTION HAVING UNKNOWN VARIABLE AS BINDING POSITION BY MINIMIZING POTENTIAL ENERGY — S11

CALCULATING POSITION OF MINIMUM ENERGY AT BENDING POSITION IN LAGRANGE MULTIPLIER METHOD — S12

END

F I G. 1

Z DIRECTION
(GRAVITY)

P4

P3

P2

P1

P0 =(p0x, p0y, p0z)

F I G. 2

FLOW OF PROCESS

$P0 = (p0x, p0y, p0z)$

P1

P2

MOVING TO
BINDING POSITION

P3

P4

F I G.  3

EP 2 068 260 A1

EQUALLY DIVIDING DISTANCE BETWEEN END POINTS OF HARNESS — S20

SETTING MODULUS OF ELASTICITY AND FLEXURAL COEFFICIENT — S21

DETERMINING PARTICLE AS BINDING FROM LINEAR DISTANCE BETWEEN END POINTS — S22

MOVING PARTICLE AS BINDING TO BINDING POSITION — S23

SOLVING KINETIC EQUATION — S24

DETERMINING SHAPE — S25

F I G.  4

SELECTING SET (POSITION IN ALLOWED RANGE) OF CANDIDATE POINTS OF BINDING POSITION X1···Xn ⟋ S30

↓

MINIMUM POTENTIAL ENERGY＝MAXVALUE ⟋ S31

↓

◇ loop ◇

↓

EQUALLY DIVIDING DISTANCE BETWEEN END POINTS OF HARNESS ⟋ S32

↓

SETTING MODULUS OF ELASTICITY AND FLEXURAL COEFFICIENT ⟋ S33

↓

MOVING PARTICLE AS BINDING TO BINDING POSITION ⟋ S34

↓

SOLVING KINETIC EQUATION ⟋ S35

↓

◇ POTENTIAL ENERGY ＜ MINIMUM POTENTIAL ENERGY? ◇ S36

Yes ↓     No ⟋ S37

CANDIDATE SHAPE ＝ CURRENT SHAPE MINIMUM POTENTIAL ENERGY ＝ POTENTIAL ENERGY

↓

◇ loop ◇

↓

( END )

F I G. 5

SELECTING SET (POSITION IN ALLOWED RANGE) OF
CANDIDATE POINTS OF BINDING POSITION
X1 ··· Xn ⟋ S40

MINIMUM POTENTIAL ENERGY=MAXVALUE ⟋ S41

loop

EQUALLY DIVIDING DISTANCE BETWEEN END POINTS OF
HARNESS ⟋ S42

SETTING MODULUS OF ELASTICITY AND FLEXURAL
COEFFICIENT ⟋ S43

MOVING PARTICLE AS BINDING TO BINDING POSITION ⟋ S44

MOVING NEXT PARTICLE IN SPECIFIED DIRECTION ⟋ S45

SOLVING KINETIC EQUATION ⟋ S46

S47

POTENTIAL ENERGY < MINIMUM POTENTIAL ENERGY?

Yes

CANDIDATE SHAPE = CURRENT SHAPE
MINIMUM POTENTIAL ENERGY =
POTENTIAL ENERGY ⟋ S48

No

loop

END

F I G. 6

```
                    ┌──────────────────────────────────────┐
                    │  DETERMINING LENGTH L BETWEEN HARNESSES │─── S50
                    │     (MOVING L FROM LMIN TO LMAX)        │
                    └──────────────────────────────────────┘
                                    │
                              ◇ loop ◇ ◄─────────────────────┐
                                    │                        │
                    ┌──────────────────────────────────────┐ │
                    │ SELECTING SET (POSITION IN ALLOWED RANGE) OF │─── S51
                    │ CANDIDATE POINTS OF BINDING POSITION(X1···Xn) │
                    └──────────────────────────────────────┘ │
                    ┌──────────────────────────────────────┐ │
                    │  MINIMUM POTENTIAL ENERGY=MAXVALUE    │─── S52
                    └──────────────────────────────────────┘ │
                                    │                        │
                              ◇ loop ◇ ◄──────────────────┐  │
                                    │                     │  │
                    ┌──────────────────────────────────────┐ │ │
                    │ EQUALLY DIVIDING DISTANCE BETWEEN END POINTS OF │─── S53
                    │       HARNESS ON BASIS OF L           │ │ │
                    └──────────────────────────────────────┘ │ │
                    ┌──────────────────────────────────────┐ │ │
                    │ SETTING MODULUS OF ELASTICITY AND FLEXURAL │─── S54
                    │           COEFFICIENT                  │ │ │
                    └──────────────────────────────────────┘ │ │
                    ┌──────────────────────────────────────┐ │ │
                    │ MOVING PARTICLE AS BINDING TO BINDING POSITION │─── S55
                    └──────────────────────────────────────┘ │ │
                    ┌──────────────────────────────────────┐ │ │
                    │        SOLVING KINETIC EQUATION       │─── S56
                    └──────────────────────────────────────┘ │ │
```

POTENTIAL ENERGY < MINIMUM POTENTIAL ENERGY? — S57

Yes

CANDIDATE SHAPE = CURRENT SHAPE
MINIMUM POTENTIAL ENERGY =
POTENTIAL ENERGY — S58

No

loop

loop

END

F I G. 7

GENERATING ARRAY OF END POINT POSITIONS OF HARNESS
(FOR EXAMPLE, 36 AT EVERY 10°) — S60

MAXIMUM POTENTIAL = 0 — S61

LOOP FOR ONE END POINT POSITION OF HARNESS? — S62

EQUALLY DIVIDING DISTANCE BETWEEN END POINTS OF HARNESS — S63

SETTING MODULUS OF ELASTICITY AND FLEXURAL COEFFICIENT — S64

DETERMINING PARTICLE AS BINDING FROM LINEAR DISTANCE BETWEEN END POINTS — S65

MOVING PARTICLE AS BINDING TO BINDING POSITION — S66

SOLVING KINETIC EQUATION — S67

DETERMINING SHAPE AT CORRESPONDING END POINT — S68

IF (CURRENT POTENTIAL) > MAXIMUM POTENTIAL [MAXIMUM POTENTIAL = CURRENT POTENTIAL, MAXIMUM POTENTIAL POSITION = CURRENT POSITION] — S69

loop

END

F I G. 8

GENERATING ARRAY OF END POINT POSITIONS OF HARNESS
(FOR EXAMPLE, 36 AT EVERY 10°) — S75

↓

LOOP FOR ONE END POINT POSITION OF HARNESS? — S76

↓

DISPLAYING CORRESPONDING SHAPE SHOWN IN FIG. 8 — S77

↓

MAXIMUM POTENTIAL POSITION SHOWN IN FIG. 8? — S78

Yes ↓         No

DISPLAYING MESSAGE — S79

loop

↓

END

F I G.  9

INFORMATION PROVIDER 16

NETWORK 15

| 14 | 13 | 12 | 11 |
|---|---|---|---|
| INTERFACE | RAM | ROM | CPU |

BUS 10

INPUT/OUTPUT DEVICE
20

DISK DRIVE
18

HDD
17

PORTABLE RECORD MEDIUM 19

F I G．1 0

Europäisches
Patentamt

European
Patent Office

Office européen
des brevets

**EUROPEAN SEARCH REPORT**

Application Number

EP 08 16 3310

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/240383 A1 (HASHIMA MASAYOSHI [JP] ET AL) 27 October 2005 (2005-10-27) * paragraphs [0020] - [0033]; figures 1,3,5,15 * | 1-15 | INV. G06F17/50 ADD. B60R16/00 |
| A | EP 1 130 527 A (MAZDA MOTOR [JP]) 5 September 2001 (2001-09-05) * the whole document * | 1-15 | |
| A | EP 1 403 146 A (YAZAKI CORP [JP]) 31 March 2004 (2004-03-31) * the whole document * | 1-15 | |
| A | DE 102 47 050 A1 (YAZAKI CORP [JP]) 30 April 2003 (2003-04-30) * the whole document * | 1-15 | |

TECHNICAL FIELDS
SEARCHED      (IPC)

G06F
B60R

The present search report has been drawn up for all claims

| Place of search | Date of completion of the search | Examiner |
|---|---|---|
| Munich | 2 December 2008 | Wellisch, J |

EPO FORM 1503 03.82 (P04C01)

**ANNEX TO THE EUROPEAN SEARCH REPORT
ON EUROPEAN PATENT APPLICATION NO.**

EP 08 16 3310

This annex lists the patent family members relating to the patent documents cited in the above-mentioned European search report.
The members are as contained in the European Patent Office EDP file on
The European Patent Office is in no way liable for these particulars which are merely given for the purpose of information.

02-12-2008

| Patent document cited in search report | | Publication date | Patent family member(s) | | Publication date |
|---|---|---|---|---|---|
| US 2005240383 | A1 | 27-10-2005 | WO | 2004104868 A1 | 02-12-2004 |
| EP 1130527 | A | 05-09-2001 | JP | 2001250438 A | 14-09-2001 |
| | | | KR | 20010087220 A | 15-09-2001 |
| | | | US | 2001020223 A1 | 06-09-2001 |
| EP 1403146 | A | 31-03-2004 | JP | 2004139569 A | 13-05-2004 |
| | | | KR | 20040027400 A | 01-04-2004 |
| | | | US | 2004167752 A1 | 26-08-2004 |
| DE 10247050 | A1 | 30-04-2003 | JP | 3845287 B2 | 15-11-2006 |
| | | | JP | 2003123562 A | 25-04-2003 |
| | | | US | 2003066185 A1 | 10-04-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Masayoshi Hashima ; Yosuke Senda ; Yuichi Sato.** Graphics and CAD" No. 113 IPSJ SIG Technical Report 2003-CG-113 "3-dimensional Design Support System. *Study report of Information Processing Society of Japan*